(19) **Europäisches Patentamt / European Patent Office / Office européen des brevets**

(11) **EP 3 173 256 A1**

(12) # EUROPEAN PATENT APPLICATION
published in accordance with Art. 153(4) EPC

(43) Date of publication:
**31.05.2017 Bulletin 2017/22**

(21) Application number: **15824536.5**

(22) Date of filing: **24.06.2015**

(51) Int Cl.:
**B60C 11/16** (2006.01)

(86) International application number:
**PCT/JP2015/068205**

(87) International publication number:
**WO 2016/013343 (28.01.2016 Gazette 2016/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **23.07.2014 JP 2014149997**

(71) Applicant: **The Yokohama Rubber Co., Ltd.
Minato-ku
Tokyo 105-8685 (JP)**

(72) Inventor: **MATSUMOTO, Kenichi
Hiratsuka-shi
Kanagawa 254-8601 (JP)**

(74) Representative: **Dilg, Haeusler, Schindelmann
Patentanwaltsgesellschaft mbH
Leonrodstrasse 58
80636 München (DE)**

(54) **STUD PIN AND PNEUMATIC TIRE**

(57) A stud pin (30) arranged in a hole (24) in a tread portion of the pneumatic tire (1), includes: a first flange portion (31) having a first surface that faces the bottom surface of the hole and a second surface that faces in the opposite direction to the first surface; a body (34) connected to the second surface of the first flange portion, and that is arranged in the hole; a tip (35) supported by the body, and that projects to the outer side from the ground contact surface of the tread portion; and a through hole (40) that connects a first opening provided in the first surface and a second opening.

FIG. 3

**Description**

Technical Field

The present invention relates to a stud pin and pneumatic tire.

Background Art

Pneumatic tires with stud pins are known as winter tires. Patent Document 1 discloses one example of a stud pin having a flange portion (head).

Citation List

Patent Literature

Patent Document 1: Japanese Unexamined Patent Application Publication (translation of PCT application) No. 2011-521829

Summary of Invention

Technical Problem

At least a portion of the stud pins is arranged in holes provided in the tread portion of the pneumatic tire. If a stud pin drops out from the hole on the tread portion, the performance on ice of the pneumatic tire will be reduced.
It is an object of one aspect of the present invention to provide a stud pin with reduced occurrence of dropping out from the hole in the tread portion. Also, it is an object of the present invention to provide a pneumatic tire from which it is difficult for stud pins to drop out, and for which reduction in performance on ice can be minimized.

Solution to Problem

A first aspect of the present invention provides a stud pin arranged in a hole in the tread portion of a pneumatic tire, including: a first flange portion having a first surface that faces the bottom surface of the hole and a second surface that faces in the opposite direction to the first surface; a body connected to the second surface of the first flange portion and that is arranged in the hole; a tip supported by the body and that projects to the outer side from the ground contact surface of the tread portion; and a through hole that connects a first opening provided in the first surface and a second opening.
According to the first aspect of the present invention, the first flange portion is provided, so the first flange portion is caught on the inside surface of the hole, so dropping out of the stud pins from the holes is reduced. Also, the through hole is provided, so when the stud pin is inserted into the hole of the tread portion, the gas between the first surface of the first flange portion and the bottom surface of the hole flows into the through hole from the first opening, and is discharged from the second opening via the through hole. In this way, the operation of inserting the stud pins in the holes of the tread portion is smoothly carried out. The gas between the first surface of the first flange portion and the bottom surface of the hole is discharged via the through hole, so the gas retained between the first surface of the first flange portion and the bottom surface of the hole is reduced. Therefore, the occurrence of stud pins dropping out from the holes due to the pressure of the gas between the first surface of the first flange portion and the bottom surface of the hole is reduced. Also, the stud pin is arranged in the hole in the desired attitude, so the first flange portion will be sufficiently caught on the inner surface of the hole. Also, the stud pin will be reduced in weight by the through hole. Therefore, damage to the road surface in contact with the tip is reduced.
In the first aspect of the present invention, the body may include a second flange portion that includes a third surface arranged around the tip, and a fourth surface that faces in the opposite direction to the third surface, and the second opening faces a space between the second surface and the fourth surface.
In this way, the gas between the first surface of the first flange portion and the bottom surface of the hole is smoothly discharged to the space between the second surface of the first flange portion and the fourth surface of the second flange portion, via the through hole. Also, not only the first flange portion but also the second flange portion is provided, so both the first flange portion and the second flange portion are caught on the inside surface of the hole, so dropping out of the stud pins from the holes is reduced.
In the first aspect of the present invention, the body includes an intermediate portion arranged between the fourth surface and the second surface, with a dimension in a plane orthogonal to a center axis that passes through the tip that is smaller than that of the second flange portion, and the second opening may be provided on a side surface of the intermediate portion.

In this way, the gas between the first surface of the first flange portion and the bottom surface of the hole is smoothly discharged to the space between the second surface of the first flange portion and the fourth surface of the second flange portion, via the through hole.

In the first aspect of the present invention, the second opening may be provided on the second surface.

In this way, the gas between the first surface of the first flange portion and the bottom surface of the hole is smoothly discharged via the through hole provided in the first flange portion. Also, the operation of forming the through hole is smoothly carried out.

In the first aspect of the present invention, the second opening may be provided on an outer surface of the body.

In this way, the gas between the first surface of the first flange portion and the bottom surface of the hole is smoothly discharged via the through hole provided in the first flange portion and the body.

In the first aspect of the present invention, the area of the first opening may be from 0.3 mm$^2$ to 3.5 mm$^2$.

In this way, discharge of the gas between the first surface of the first flange portion and the bottom surface of the hole occurs smoothly, and the occurrence of stud pins dropping out from the holes is reduced. If the area of the first opening is smaller than 0.3 mm$^2$, there is a possibility that it will be difficult for the gas between the first surface of the first flange portion and the bottom surface of the hole to smoothly flow into the through hole via the first opening. As a result, there is a possibility that the gas between the first surface of the first flange portion and the bottom surface of the hole will not be sufficiently discharged. If the area of the first opening is larger than 3.5 mm$^2$, the weight of the stud pin is reduced too much, and when the tip and the road surface make contact, the stud pin can easily move within the hole. As a result, there is a high possibility that the stud pin will drop out from the hole.

In the first aspect of the present invention, the area of the second opening may be from 0.3 mm$^2$ to 3.5 mm$^2$.

In this way, discharge of the gas between the first surface of the first flange portion and the bottom surface of the hole occurs smoothly, and the occurrence of stud pins dropping out from the holes is reduced. When the area of the second opening is smaller than 0.3 mm$^2$, there is a possibility that it will be difficult for the gas in the through hole to be smoothly discharged from the second opening. As a result, there is a possibility that the gas between the first surface of the first flange portion and the bottom surface of the hole will not be sufficiently discharged. If the area of the second opening is larger than 3.5 mm$^2$, the weight of the stud pin is reduced too much, and when the tip and the road surface make contact, the stud pin can easily move within the hole. As a result, there is a high possibility that the stud pin will drop out from the hole.

In the first aspect of the present invention, a plurality of the through holes may be provided around the center axis that passes through the tip.

In this way, the gas between the first surface of the first flange portion and the bottom surface of the hole is smoothly discharged via the plurality of through holes.

A second aspect of the present invention is a pneumatic tire, including: a tread portion;

   a hole provided in the tread portion; and
   a stud pin according to the first aspect arranged at least in part in the hole.

According to the second aspect of the present invention, the occurrence of dropping out of the stud pins from the holes in the tread portion is reduced. Therefore, the reduction of the performance on ice of the pneumatic tire is minimized.

Advantageous Effects of Invention

According to an aspect of the present invention, a stud pin with reduced occurrence of dropping out from the hole in the tread portion is provided. Also, according to an aspect of the present invention, a pneumatic tire is provided from which it is difficult for stud pins to drop, and for which reduction in performance on ice can be minimized.

Brief Description of Drawings

FIG. 1     is a cross-sectional view illustrating a part of a tire according to the present embodiment.
FIG. 2     is a plan view illustrating an example of a tread portion of a pneumatic tire according to the present embodiment.
FIG. 3     is a diagram illustrating an example of a stud pin arranged in a hole in the tread portion according to the present embodiment.
FIG. 4     is a cross-sectional view illustrating an example of a stud pin according to the present embodiment.

FIG. 5    is an isometric view illustrating an example of a stud pin according to the present embodiment.

FIG. 6    is a cross-sectional view illustrating an example of a hole in the tread portion according to the present embodiment.

FIG. 7    is a schematic drawing illustrating an example of a form of inserting the stud pin according to the present embodiment into a hole.

FIG. 8    is a schematic drawing illustrating an example of a form of inserting the stud pin according to a comparative example into a hole.

FIG. 9    is a cross-sectional view illustrating an example of a stud pin according to the present embodiment.

FIG. 10    is a cross-sectional view illustrating an example of a stud pin according to the present embodiment.

FIG. 11    is a cross-sectional view illustrating an example of a stud pin according to the present embodiment.

FIG. 12    is a cross-sectional view illustrating an example of a stud pin according to the present embodiment.

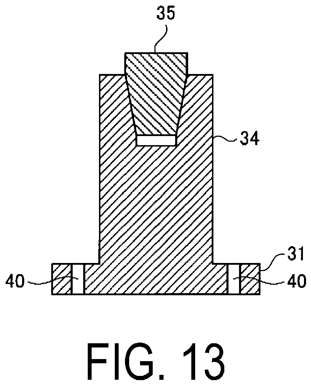

FIG. 13    is a cross-sectional view illustrating an example of a stud pin according to the present embodiment.

FIG. 14    shows the results of performance testing of pneumatic tires according to the present embodiment.

Description of Embodiments

Embodiments according to the present invention will be described with reference to the appended drawings. However, the present invention is not limited to those embodiments. The constituents of the embodiments described below can be combined with one another as appropriate. In addition, some of the constituents may not be used in some cases.

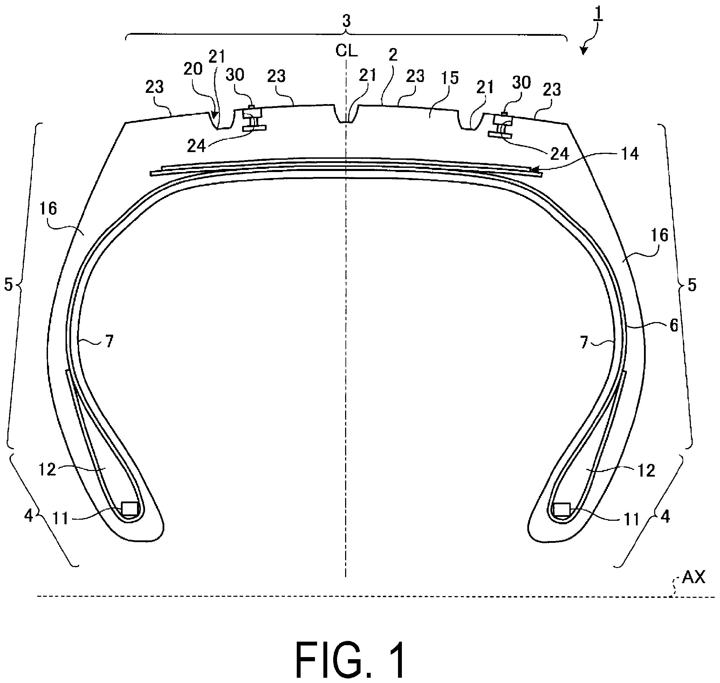

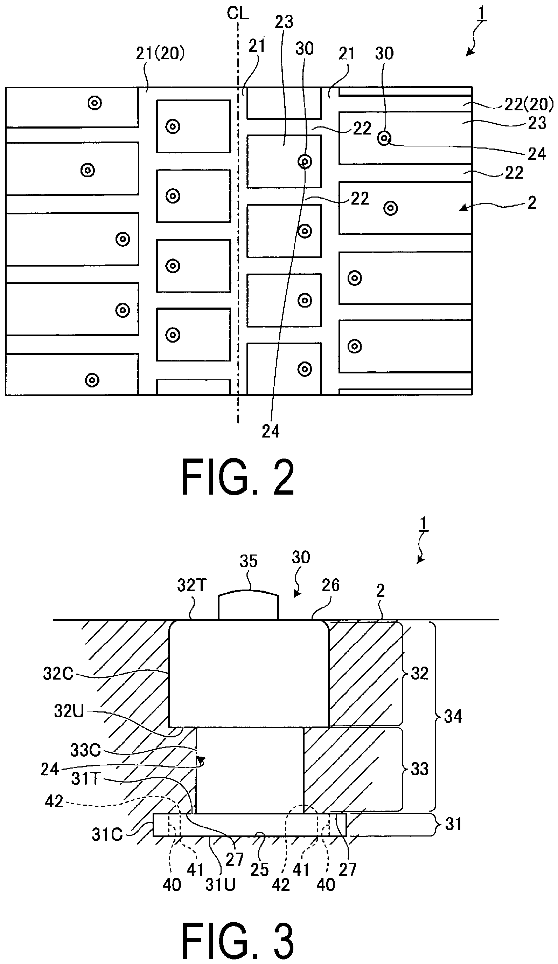

FIG. 1 is a cross-sectional view illustrating a portion of a pneumatic tire according to the present embodiment. FIG. 1 illustrates a meridian cross sectional view through which the rotational axis AX of a pneumatic tire 1 passes. FIG. 2 is a plan view illustrating an example of the tread portion of the pneumatic tire 1 according to the present embodiment.

The pneumatic tire 1 rotates about the rotational axis AX as center. In the following description, the rotation direction about the rotational axis AX as center is referred to as the circumferential direction, the direction parallel to the rotational axis AX is referred to as the width direction, and the radiation direction with respect to the rotational axis AX is referred to as the radial direction. The center line (equatorial line) CL of the pneumatic tire 1 passes through the center of the pneumatic tire 1 in the width direction.

In the present embodiment, the pneumatic tire 1 is a winter tire (snow tire) having stud pins 30. The pneumatic tire 1 having stud pins 30 may also be referred to as a stud tire 1, or a spike tire 1. In the description below, the pneumatic tire 1 is also referred to simply as tire 1.

As illustrated in FIG. 1, the tire 1 includes a tread portion 3 having a ground contact surface 2, a bead portion 4 that is connected to a rim, and a sidewall portion 5 that connects the tread portion 3 and the bead portion 4. The ground contact surface 2 contacts the road surface (ground surface) when the tire 1 is running.

The tire 1 includes a carcass 6 and an inner liner 7. The carcass 6 is the framework for the tire 1 that maintains the form of the tire 1. The inner liner 7 is arranged facing the cavity of the tire 1. The carcass 6 and the inner liner 7 are arranged in the tread portion 3, the bead portion 4, and the sidewall portion 5.

The bead portion 4 includes a bead core 11 and a bead filler 12. The bead core 11 fixes the tire 1 to the rim. The bead core 11 is arranged on both sides of the center line CL of the tire 1 in the width direction. The bead core 11 includes an annular member of a bundle of a plurality of high-carbon steel. The bead core 11 is arranged so as to encircle the rotational axis AX. The bead filler 12 increases the stiffness of the bead portion 4.

The tread portion 3 includes a belt 14, and a tread rubber 15. The belt 14 includes a plurality of belt members laminated. The belt 14 is arranged on the outer side of the carcass 6 in the radial direction. The belt 14 constrains the carcass 6, and increases the stiffness of the tread portion 3. A tread pattern is formed on the tread rubber 15. The tread rubber 15 is arranged on the outer side of the carcass 6 and the belt 14 in the radial direction. The ground contact surface 2 is arranged on the tread rubber 15.

The sidewall portion 5 includes sidewall rubber 16. The sidewall portion 5 is arranged on both sides of the center line CL in the width direction.

The carcass 6 is arranged in a toroidal form between the bead core 11 on a first side of the center line CL in the width direction and the bead core 11 on a second side. Both ends of the carcass 6 are wrapped around so as to enclose the bead filler 12.

Grooves 20 are formed on the tread rubber 15. A tread pattern is formed by the grooves 20. The grooves 20 include main grooves 21 formed in the circumferential direction of the tire 1, and lug grooves 22 formed in the width direction of the tire 1. Blocks 23 are defined in the tread rubber 15 by the main grooves 21 and the lug grooves 22. The ground contact surface 2 includes the surface of the blocks 23.

In the present embodiment, the tire 1 has stud pins 30. Holes 24 are formed in the tread rubber 15 of the tread portion 3. At least a portion of the stud pin 30 is arranged in the hole 24 provided in the tread portion 3. The stud pin 30 is supported on the inside surface of the hole 24 so that at least a portion of the stud pin 30 projects from the ground contact surface 2 of the tread portion 3. Note that the hole 24 may also be referred to as a stud pin hole 24.

For example, the holes 24 may be formed together with the grooves 20 in the vulcanization step, which is one manufacturing step of the tire 1. The holes 24 may also be formed by a drilling process on the tread rubber 15, after the vulcanization process.

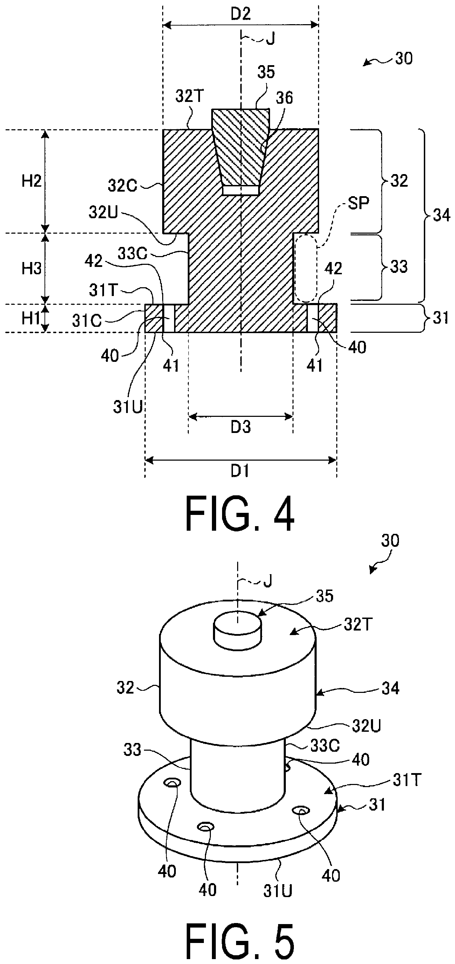

FIG. 3 is a diagram illustrating an example of the stud pin 30 arranged in the hole 24 in the tread portion 3 according to the present embodiment. FIG. 4 is a cross-sectional view illustrating an example of the stud pin 30 according to the present embodiment. FIG. 5 is a perspective view illustrating an example of the stud pin 30 according to the present embodiment.

As illustrated in FIGS. 3, 4, and 5, the stud pin 30 includes a bottom flange portion (1st flange portion) 31 that is arranged in the hole 24 provided on the tread portion 3, a body 34 that is arranged in the hole 24, and a tip 35 supported on the body 34. In the present embodiment, the body 34 includes an upper flange portion (second flange portion) 32 and an intermediate portion 33. The bottom flange portion 31 and the body 34 are integral (a single member).

The stud pin 30 is arranged around a center line J that passes through the tip 35. The bottom flange portion 31, the body 34, and the tip 35 are each circular in planes orthogonal to the center line J. In other words, in the present embodiment, the stud pin 30 is a so-called circular pin. The bottom flange portion 31 and the upper flange portion 32 are each circular flanges. The intermediate portion 33 has a cylindrical shape.

The hole 24 has a bottom surface 25. An opening 26 is provided on the upper end portion of the hole 24. The ground contact surface 2 is arranged around the opening 26. The stud pin 30 is inserted from the opening 26 of the hole 24 to the inside of the hole 24. In this way, at least a portion of the stud pin 30 is arranged inside the hole 24. In the present embodiment, the bottom flange portion 31 and the body 34 are arranged on the inside of the hole 24. When the bottom flange portion 31 and the body 34 are arranged on the inside of the hole 24, the tip 35 is arranged so that it protrudes to the outer side from the ground contact surface 2 of the tread portion 3.

The bottom flange portion 31 includes a bottom surface (first surface) 31U that faces towards the bottom surface 25 of the hole 24, a top surface (second surface) 31T that faces in the opposite direction to the bottom surface 31U, and a side surface 31C that connects the peripheral edge of the bottom surface 31U and the peripheral edge of the top surface 31T.

The upper flange portion 32 includes a top surface (third surface) 32T arranged around the tip 35, a bottom surface (fourth surface) 32U facing in the opposite direction to the top surface 32T, and a side surface 32C that connects the peripheral edge of the top surface 32T and the peripheral edge of the bottom surface 32U.

The intermediate portion 33 includes a side surface 33C.

The outer surface (surface) of the body 34 includes the top surface 32T, the bottom surface 32U, the side surface 32C, and the side surface 33C. The outer surface (surface) of the bottom flange portion 31 includes the bottom surface 31U, the top surface 31T, and the side surface 31C. The outer surface (surface) of the stud pin 30 includes the outer surface of the bottom flange portion 31, the outer surface of the body 34, and the outer surface of the tip 35.

The body 34 is connected to the top surface 31T of the bottom flange portion 31. In the radial direction, the body 34 is arranged to the outer side of the bottom flange portion 31. In the radial direction, the upper flange portion 32 is arranged to the outer side of the intermediate portion 33. In the radial direction, the intermediate portion 33 is arranged between the bottom flange portion 31 and the upper flange portion 32.

In the present embodiment, the intermediate portion 33 of the body 34 and the bottom flange portion 31 are connected. The side surface 33C of the intermediate portion 33 is connected to the top surface 31T of the bottom flange portion 31. The side surface 33C of the intermediate portion 33 is connected to the bottom surface 32U of the upper flange portion 32. The intermediate portion 33 is arranged between the bottom surface 32U and the top surface 31T.

The top surface 31T, the bottom surface 31U, the top surface 32T, and the bottom surface 32U are each flat surfaces. The side surface 33C and the top surface 31T are substantially orthogonal. The side surface 33C and the bottom surface 31U are substantially orthogonal. Note that a recess may be provided in at least a portion of the bottom surface 31U.

In a plane orthogonal to the center line J, the dimension (outer diameter) D3 of the intermediate portion 33 is smaller than the dimension (outer diameter) D2 of the upper flange portion 32. In a plane orthogonal to the center line J, the dimension (outer diameter) D3 of the intermediate portion 33 is smaller than the dimension (outer diameter) D1 of the bottom flange portion 31. In a plane orthogonal to the center line J, the dimension (outer diameter) D2 of the upper flange portion 32 is smaller than the dimension (outer diameter) D1 of the bottom flange portion 31. The dimension D1 is about 8.0 mm.

In a direction parallel to the center line J, the dimension (height) H3 of the intermediate portion 33 is smaller than the dimension (height) H2 of the upper flange portion 32. In a direction parallel to the center line J, the dimension (height) H3 of the intermediate portion 33 is larger than the dimension (height) H1 of the bottom flange portion 31. In a direction parallel to the center line J, the dimension (height) H2 of the upper flange portion 32 is larger than the dimension (height) H1 of the bottom flange portion 31.

The body 34 supports the tip 35. The body 34 includes a hole 36 in which a portion of the tip 35 is arranged.

The top surface 32T is arranged around the opening of the top end of the hole 36. The tip 35 is supported on the inner surface of the hole 36 so that it protrudes to the outside from the top surface 32T. The body 34 is arranged in the hole 24 so that the top surface 32T and the ground contact surface 2 are substantially arranged to be coplanar.

The stud pin 30 includes a through hole 40 formed in such a way as to connect a first opening 41 and a second opening 42. The first opening 41 is provided on at least a portion of the outer surface of the body 34 and the outer surface of the bottom flange portion 31. The second opening 42 is provided at a position on the outer surface of the body 34 and the outer surface of the bottom flange portion 31 that is different from that of the first opening 41.

In the present embodiment, the first opening 41 is provided on the bottom surface 31U of the bottom flange portion 31. The bottom surface 31U is arranged around the first opening 41.

The second opening 42 is provided on an outer surface of the bottom flange portion 31 or an outer surface of the body 34 that is different from the bottom surface 31U. The outer surfaces of the bottom flange portion 31 that are different from the bottom surface 31U include the top surface 31T, and the side surface 31C.

In the present embodiment, the second opening 42 is provided on the top surface 31T of the bottom flange portion 31. The top surface 31T is arranged around the second opening 42.

In other words, in the present embodiment, the through hole 40 is provided penetrating the bottom flange portion 31.

At least a portion of the second opening 42 faces a space SP between the top surface 31T of the bottom flange portion 31 and the bottom surface 32U of the upper flange portion 32. In the present embodiment, the second opening 42 is arranged on the top surface 31T opposite the bottom surface 32U.

In the present embodiment, a plurality of through holes 40 is provided around the center line J. In the present embodiment, four through holes 40 are provided around the center line J. Note that three through holes 40 may be provided around the center line J, or two may be provided. The plurality of through holes 40 is arranged at equal intervals around the center line J. Note that the plurality of through holes 40 may be arranged at unequal intervals around the center line J. Note that there may be only one through hole 40.

In the present embodiment, the area of the first opening 41 is from 0.3 mm$^2$ to 3.5 mm$^2$. The area of the second opening 42 is from 0.3 mm$^2$ to 3.5 mm$^2$. The area of the first opening 41 may be from 0.38 mm$^2$ to 3.14 mm$^2$. The area of the second opening 42 may be from 0.38 mm$^2$ to 3.14 mm$^2$.

Next, an example of the operation of inserting the stud pin 30 according to the present embodiment into the hole 24 on the tread portion 3 is described.

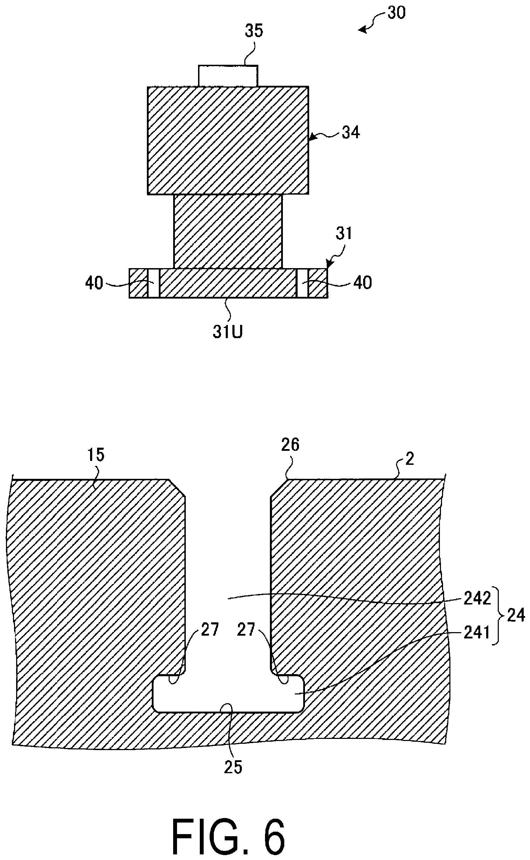

FIG. 6 is a cross-sectional view illustrating an example of the hole 24 in the tread portion 3 before the stud pin 30 is inserted. As illustrated in FIG. 6, prior to insertion of the stud pin 30 into the hole 24, the inner diameter of the hole 24 is smaller than the outer diameter of the stud pin 30. The hole 24 includes a first portion 241 in which the bottom flange portion 31 is arranged, and a second portion 242 in which the body 34 is arranged. The inner diameter of the first portion 241 is larger than the inner diameter of the second portion 242. The first portion 241 is defined by the bottom surface 25, and a support surface 27 opposite a portion of the bottom surface 25 with a gap therebetween.

The stud pin 30 is inserted from the opening 26 of the hole 24 to the inside of the hole 24. With the bottom surface 31U of the bottom flange portion 31 positioned opposite the bottom surface 25 of the hole 24, the operation of inserting the stud pin 30 into the hole 24 is carried out so that after the bottom flange portion 31 has passed through the opening 26, the body 34 passes through the opening 26.

The hole 24 is provided in the tread rubber 15. When the stud pin 30 is inserted into the hole 24, at least a portion of the tread rubber 15 deforms elastically. In this way, the bottom flange portion 31 and the body 34 are inserted inside the hole 24, and the inner surface of the hole 24 contacts the outer surface of the bottom flange portion 31 and the outer surface of the body 34.

The stud pin 30 is inserted into the hole 24 so that the bottom surface 31U of the bottom flange portion 31 contacts the bottom surface 25 of the hole 24. The bottom flange portion 31 is arranged in the first portion 241 of the hole 24. When the bottom flange portion 31 is arranged in the first portion 241, the bottom surface 31U of the bottom flange portion 31 contacts the bottom surface 25 of the hole 24. The top surface 31T of the bottom flange portion 31 contacts the support surface 27. The bottom flange portion 31 is caught on the inside surface of the hole 24 including the support surface 27, so the stud pin 30 is prevented from dropping out from the hole 24.

The body 34 is arranged in the second portion 242 of the hole 24. In the present embodiment, the body 34 includes the upper flange portion 32. Not only the bottom flange portion 31, but also the upper flange portion 32 is caught in the inner surface of the hole 24, so the stud pin 30 is prevented from dropping out from the hole 24.

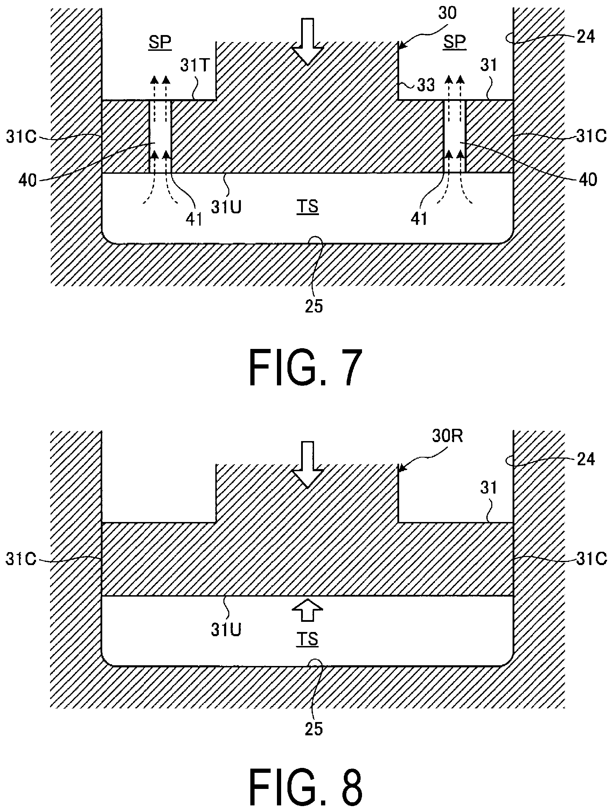

FIG. 7 is a schematic drawing illustrating an example of a form of inserting the stud pin 30 into the hole 24. As illustrated in FIG. 7, in the operation of inserting the stud pin 30 into the hole 24, a space TS is formed between the bottom surface 31U of the bottom flange portion 31 and the hole 24 with the side surface 31C of the bottom flange portion 31 in close contact with the inside surface of the hole 24. The space TS is filled with gas (air).

In the present embodiment, the through holes 40 function as discharge holes (vent holes) for venting the gas of the space TS to outside the space TS. At least a portion of the gas of the space TS flows into the through hole 40 via the first opening 41 provided in the bottom surface 31U. The gas that flows into the through hole 40 is discharged from the second opening 42 after flowing through the through hole 40. In the present embodiment, the first opening 41 functions as an inlet into which the gas of the space TS flows. The second opening 42 functions as an outlet (discharge outlet) for discharging from the space TS the gas that has flowed into the through hole 40.

According to the discovery of the inventors, when the gas of the space TS is not discharged, there is a high possibility that the stud pins 30 will drop out from the holes 24.

FIG. 8 is a schematic drawing illustrating an example of a form of inserting the stud pin 30R into the hole 24 according to a comparative example. No through hole (40) is provided in the stud pin 30R.

As illustrated in FIG. 8, in the operation of inserting the stud pin 30 into the hole 24, the space TS is formed between the bottom surface 31U of the bottom flange portion 31 and the hole 24, with the side surface 31C of the bottom flange portion 31 in close contact with the inside surface of the hole 24. The space TS is filled with gas (air).

In the example illustrated in FIG. 8, the gas of the space TS remains as it is in the space TS. Therefore, when the operation of inserting the stud pin 30R is carried out so that the bottom surface 31U of the bottom flange portion 31 approaches the bottom surface 25 of the hole 24, the volume of the space TS is reduced, and the pressure in the space TS is increased. When the pressure in the space TS increases, it becomes difficult for the bottom surface 31U of the bottom flange portion 31 to approach the bottom surface 25 of the hole 24. Therefore, there is a possibility that the stud pin 30R will not be arranged in the hole 24 in the desired attitude. When the stud pin 30R is not arranged in the hole 24 in the desired attitude, there is a possibility that the bottom flange portion 31 will not be sufficiently caught on the inner surface of the hole 24. As a result, there is a high possibility that the stud pin 30R will drop out from the hole 24.

Also, as a result of the high pressure gas in the space TS, there is a possibility that a pressing force will be generated on the bottom surface 31U of the bottom flange portion 31 so that the stud pin 30R will drop out from the hole 24. As a result, there is a high possibility that the stud pin 30R will drop out from the hole 24.

In this way, according to the discovery of the inventors, when the gas of the space TS is not sufficiently discharged in the operation of inserting the stud pin 30R into the hole 24, there is a high possibility that the stud pin 30R will drop out from the hole 24.

According to the present embodiment, the stud pin 30 includes the through hole 40 that functions as a discharge hole, as illustrated in FIG. 7. Therefore, in the operation of inserting the stud pin 30 into the hole 24, the gas of the space TS is discharged by the through hole 40. Therefore, the stud pin 30 is arranged in the hole 24 in the desired attitude. Therefore, the bottom flange portion 31 is caught sufficiently on the inner surface of the hole 24, and fixed. Also, the increase in pressure of the space TS is minimized, and the generation of the pressing force on the bottom surface 31U of the bottom flange portion 31 is reduced.

As described above, according to the present embodiment, the bottom flange portion 31 is provided, so the bottom flange portion 31 is caught on the inside surface of the hole 24, so dropping out of the stud pins 30 from the holes 24 is reduced.

Also, according to the present embodiment, the through hole 40 is provided, so when the stud pin 30 is inserted into the hole 24 of the tread portion 3, the gas between the bottom surface 31U of the bottom flange portion 31 and the bottom surface 25 of the hole 24 flows into the through hole 40 from the first opening 41, and is discharged from the second opening 42 via the through hole 40. In this way, the increase in the pressure of the space TS between the bottom surface 31U of the bottom flange portion 31 and the bottom surface 25 of the hole 24 is reduced, so the operation of inserting the stud pins 30 into the holes 24 of the tread portion 3 can be carried out smoothly.

Also, according to the present embodiment, the gas of the space TS between the bottom surface 31U of the bottom flange portion 31 and the bottom surface 25 of the hole 24 is discharged via the through hole 40, so the retention of the gas in the space TS between the bottom surface 31U of the bottom flange portion 31 and the bottom surface 25 of the hole 24 is reduced. In this way, stud pins 30 dropping out from the holes 24 due to the force of the gas in the space TS between the bottom surface 31U of the bottom flange portion 31 and the bottom surface 25 of the hole 24 is reduced. Also, the stud pin 30 is arranged in the hole 24 in the desired attitude, so the bottom flange portion 31 will be sufficiently caught on the inner surface of the hole 24.

Also, stud pins 30 dropping out from the holes 24 of the tread portion 3 is reduced, so reduction in the performance on ice of the tire 1 is minimized.

Also, according to the present embodiment, it is possible to reduce the weight of the stud pin 30 with the through holes 40. Therefore, damage of the road surface in contact with the tip 35 is reduced.

Also, according to the present embodiment, the stud pin 30 includes the upper flange portion 32, and the second opening 42 is arranged so that it faces the space SP between the top surface 31T of the bottom flange portion 31 and the bottom surface 32U of the upper flange portion 32. Therefore, the gas of the space TS between the bottom surface 31U of the bottom flange portion 31 and the bottom surface 25 of the hole 24 is smoothly discharged via the through hole 40 into the space SP between the top surface 31T of the bottom flange portion 31 and the bottom surface 32U of the upper flange portion 32.

Also, according to the present embodiment, not only the bottom flange portion 31 but also the upper flange portion 32 is provided, so both the bottom flange portion 31 and the upper flange portion 32 are caught on the inside surface of the hole 24, so dropping out of the stud pins 30 from the holes 24 is reduced.

Also, in the present embodiment, the area of the first opening 41 is from 0.3 mm$^2$ to 3.5 mm$^2$. In this way, discharge of the gas in the space TS between the bottom surface 31U of the bottom flange portion 31 and the bottom surface 25 of the hole 24 occurs smoothly, and the occurrence of stud pins 30 dropping out from the holes 24 is reduced.

In other words, if the area of the first opening 41 is smaller than 0.3 mm$^2$, there is a possibility that it will be difficult for the gas in the space TS between the bottom surface 31U of the bottom flange portion 31 and the bottom surface 25 of the hole 24 to smoothly flow into the through hole 40 via the first opening 41. As a result, there is a possibility that the gas in the space TS between the bottom surface 31U of the bottom flange portion 31 and the bottom surface 25 of the hole 24 will not be sufficiently discharged. Therefore, there is a possibility that the through hole 40 will be unable to sufficiently fulfil its role as a discharge hole for discharging the gas of the space TS.

On the other hand, if the area of the first opening 41 is larger than 3.5 mm$^2$, the weight of the stud pins 30 is reduced too much, and when the tip 35 and the road surface make contact, the stud pin 30 can easily move within the hole 24. As a result, there is a high possibility that the stud pin 30 will drop out from the hole 24.

According to the present embodiment, by making the area of the first opening 41 from 0.3 mm$^2$ to 3.5 mm$^2$, gas in the space TS is discharged smoothly, and the occurrence of stud pins 30 dropping out from the holes 24 is reduced.

Also, in the present embodiment, the area of the second opening 42 is from 0.3 mm$^2$ to 3.5 mm$^2$. In this way, discharge of the gas in the space TS between the bottom surface 31U of the bottom flange portion 31 and the bottom surface 25 of the hole 24 occurs smoothly, and the occurrence of stud pins 30 dropping out from the holes 24 is reduced.

In other words when the area of the second opening 24 is smaller than 0.3 mm$^2$, there is a possibility that it will be difficult for the gas in the through hole 40 to be smoothly discharged. As a result, there is a possibility that the gas in the space TS between the bottom surface 31U of the bottom flange portion 31 and the bottom surface 25 of the hole 24 will not be sufficiently discharged. Therefore, there is a possibility that the through hole 40 will be unable to sufficiently fulfil its role as a discharge hole for discharging the gas of the space TS.

On the other hand, if the area of the second opening 42 is larger than 3.5 mm$^2$, the weight of the stud pins 30 is reduced too much, and when the tip 35 and the road surface make contact, the stud pin 30 can easily move within the hole 24. As a result, there is a high possibility that the stud pin 30 will drop out from the hole 24.

According to the present embodiment, by making the area of the second opening 42 from 0.3 mm$^2$ to 3.5 mm$^2$, gas in the space TS is discharged smoothly, and the occurrence of stud pins 30 dropping out from the holes 24 is reduced.

Note that the area of the first opening 41 and the area of the second opening 42 may be from 0.38 mm$^2$ to 3.14 mm$^2$. Note that the area of the first opening 41 and the area of the second opening 42 may be from 0.79 mm$^2$ to 1.77 mm$^2$.

Note that when the first opening 41 and the second opening 42 are circular, and the diameter of the first opening 41 and the diameter of the second opening 42 is d, the diameter d may be from 0.7 mm to 2.0 mm, or from 1.0 mm to 1.5 mm.

When the dimension D1 of the bottom flange portion 31 is 8.0 mm, and the diameter of the first opening 41 and the diameter of the second opening 42 is d, the diameter d may satisfy the requirement of the following Formula (1).

$$8.8 \leq d/D1 \leq 25.0 \qquad\qquad (1)$$

Note that preferably the requirement of the following Formula (2) is satisfied.

$$12.5 \leq d/D1 \leq 18.8 \qquad\qquad (2)$$

Also, in the present embodiment, a plurality of through holes 40 is provided around the center line J that passes through the tip 35. In this way, discharge of the gas in the space TS between the bottom surface 31U of the bottom flange portion 31 and the bottom surface 25 of the hole 24 occurs smoothly, via the plurality of through holes 40.

Note that preferably not less than one and not more than four through holes 40 are provided. If five or more through holes 40 are provided, the weight of the stud pins 30 is reduced too much, and when the tip 35 and the road surface make contact, the stud pin 30 can easily move within the hole 24. As a result, there is a high possibility that the stud pin 30 will drop out from the hole 24.

Note that in the present embodiment, in a plane orthogonal to the center line J, the external form of the stud pin 30 is circular. In a plane orthogonal to the center line J, the external form of the stud pin 30 may be polygonal. A polygonal form includes at least one of a triangular form and a quadrangular form. A quadrangular form includes at least one of a square, rectangle, diamond, and trapezoidal form. For example, by making the bottom flange portion 31 and the body 34 (upper flange portion 32) a polygonal form, the corners of the polygonal form become sufficiently caught on the inside surface of the hole 24, so the occurrence of dropping out of the stud pins 30 from the hole 24 is sufficiently reduced. On the other hand, by making the external form of the stud pin 30 polygonal, by increasing the dimensions of the bottom flange portion 31, and by increasing the dimensions of the upper flange portion 32, there is a possibility that the weight of the stud pin 30 will be increased. Increasing the weight of the stud pin 30 increases the damage to the road surface when the tip 35 contacts the road surface.

According to the present embodiment, the through hole 40 is provided, so the occurrence of stud pins 30 with a compact circular pin dropping out from the holes 24 can be reduced, without making the external form of the stud pin 30 polygonal, increasing the dimensions of the bottom flange portion 31, and increasing the dimensions of the upper flange portion 32. In this way, damage to the road surface is reduced, and the occurrence of stud pins 30 dropping out from the holes 24 is reduced. Also, a compact circular pin has the advantage that it is easier to manufacture and has a lower cost compared with a larger polygonal pin.

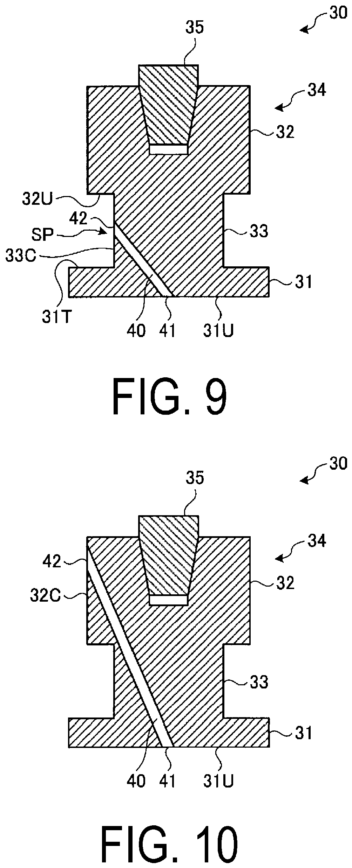

FIGS. 9, 10, 11, and 12 illustrate modified examples of the stud pin 30 according to the present embodiment.

FIG. 9 illustrates an example in which the second opening 42 is provided on a side surface 33C of the intermediate portion 33, from among the outer surface of the body 34. In the example illustrated in FIG. 9, the second opening 42 faces the space SP between the top surface 31T of the bottom flange portion 31 and the bottom surface 32U of the upper flange portion 32. The gas of the space TS flows into the through hole 40 from the first opening 41, and is discharged from the second opening 42. In the example illustrated in FIG. 9 also, the occurrence of the stud pins 30 dropping out from the holes 24 is reduced.

FIG. 10 illustrates an example in which the second opening 42 is provided on a side surface 33C of the upper flange portion 32, from among the outer surface of the body 34. In the example illustrated in FIG. 10 also, the gas of the space TS flows into the through hole 40 from the first opening 41, and is discharged from the second opening 42.

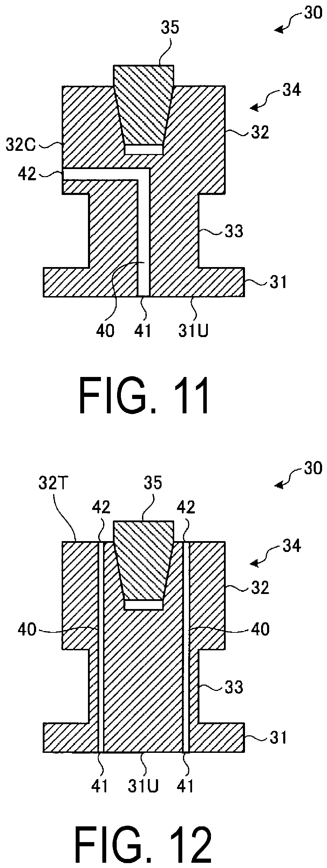

Note that a portion of the through hole 40 may be bent, as illustrated in FIG. 11.

FIG. 12 illustrates an example in which the second opening 42 is provided on the top surface 32T of the upper flange portion 32, from among the outer surface of the body 34. In the example illustrated in FIG. 12 also, the gas of the space TS flows into the through hole 40 from the first opening 41, and is discharged from the second opening 42.

Note that in the embodiment described above, a double flange type stud pin 30 was described having the bottom flange portion 31 and the upper flange portion 32. The stud pin 30 may be a single flange type having the bottom flange portion 31 and not having the upper flange portion (32).

Examples

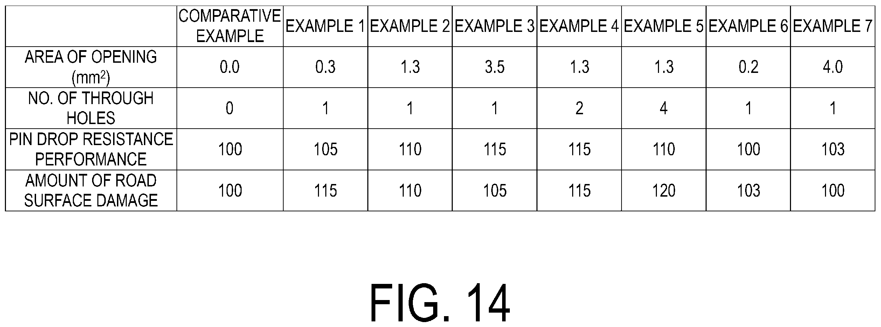

FIG. 14 is a diagram showing the results of performance tests on the tire 1 according to the present embodiment. FIG. 14 shows the results of performance testing pertaining to pin drop resistance performance of the tire 1.

In the performance testing pertaining to pin drop resistance performance, the tire 1 fitted with the stud pins 30 was fitted to an applicable rim as specified by JATMA. The size of the tire 1 was 205/55R16. The tire 1 was given the maximum air pressure and the maximum load capacity specified by JATMA.

In the performance testing pertaining to pin drop performance, the tires 1 were fitted to a front-wheel-drive test vehicle with an engine displacement of 2000 cc. The test vehicle was driven for 10000 km on dry road surfaces including asphalt road surfaces and concrete road surfaces. After driving the test vehicle, the number of stud pins 30 that dropped out was counted. An indexed evaluation based on the observation results was performed with the index value of a Comparative Example (Conventional Example) being set as the standard score (100). In this evaluation, larger numerical values are preferable.

Also, in these Examples, the amount of damage on the road surfaces (dry road surfaces) over which the tires 1 had passed was evaluated. The tires 1 were passed over granite embedded on the road surface, and the weight difference (amount of damage) of the granite before and after passage of the tires was measured. Based on the measurement results, an indexed evaluation was carried out using the Comparative Example as standard (100). In this evaluation, larger numerical values are preferable.

In FIG. 14, the area of opening is the area of the first opening 41 and the second opening 42, as described in the embodiment above. In the present Examples, the area of the first opening 41 and the area of the second opening 42 were equal.

In FIG. 14, the number of through holes is the number of the through holes 40 provided with the stud pins 30, as described in the embodiment above.

In FIG. 14, the pin drop resistance performance is a number indicating the index of the number of the stud pins 30 that have dropped out, with the Comparative Example as standard (100), larger numerical values being desirable.

In FIG. 14, the amount of road surface damage is a number indicating the index weight difference of the granite as described above, with the Comparative Example as standard (100), larger numerical values being desirable.

The pneumatic tire 1 of the Comparative Example included stud pins 30 that were not provided with the through hole 40. Therefore, the area of the opening is "0". The number of through holes is "0".

The tires 1 according to Example 1 to Example 7 included the stud pins 30 having the bottom flange portion 31 provided with the through hole 40, and the body 34 provided with the upper flange portion 32, as described with reference to FIGS. 3 to 7.

In Example 1, the area of opening was 0.3 mm$^2$, and there was one through hole 40. In Example 2, the area of opening was 1.3 mm$^2$, and there was one through hole 40. In Example 3, the area of opening was 3.5 mm$^2$, and there was one through hole 40. In Example 4, the area of opening was 1.3 mm$^2$, and there were two through holes 40. In Example 5, the area of opening was 1.3 mm$^2$, and there were four through holes 40. In Example 6, the area of opening was 0.2 mm$^2$, and there was one through hole 40. In Example 7, the area of opening was 4.0 mm$^2$, and there was one through hole 40.

As is clear from the test results, with the tires 1 of Examples 1 to 7, the pin drop resistance performance of the tires is enhanced.

Also, as can be seen from Example 1, Example 2, and Example 3, the larger the area of the opening, the smoother the gas of the space TS was released, so the pin drop resistance performance was good.

Also, as can be seen from Example 2, Example 4, and Example 5, the greater the number of the through holes 40, the lighter the stud pin 30, so the damage on the road surface was reduced.

Also, as can be seen from Example 1 and Example 6, when the area of opening was 0.3 mm$^2$ or greater, the pin drop resistance performance was good.

Also, as can be seen from Example 3 and Example 7, when the area of opening was 3.5 mm$^2$ or less, the pin drop resistance performance was good.

Reference Signs List

| | |
|---|---|
| 1 | Pneumatic tire |
| 2 | Ground contact surface |
| 3 | Tread portion |
| 4 | Bead portion |
| 5 | Sidewall portion |
| 6 | Carcass |
| 7 | Inner liner |
| 11 | Bead core |
| 12 | Bead filler |
| 14 | Belt |
| 15 | Tread rubber |
| 16 | Sidewall rubber |
| 20 | Groove |
| 21 | Main groove |
| 22 | Lug groove |
| 23 | Block |
| 24 | Hole |
| 25 | Bottom surface |
| 26 | Opening |
| 27 | Support surface |
| 30 | Stud Pin |
| 31 | Bottom flange portion (first flange portion) |
| 31C | Side surface |
| 31T | Top surface (second surface) |
| 31U | Bottom surface (first surface) |
| 32 | Upper flange portion (second flange portion) |
| 32C | Side surface |
| 32T | Top surface (third surface) |
| 32U | Bottom surface (fourth surface) |
| 33 | Intermediate portion |
| 33C | Side surface |
| 34 | Body |
| 35 | Tip |
| 36 | Hole |
| 40 | Through hole |

41  First opening
42  Second opening
AX  Rotational axis
CL  Center line
J  Center axis

**Claims**

1. A stud pin arranged in a hole in a tread portion of a pneumatic tire, comprising:

   a first flange portion having a first surface that faces a bottom surface of the hole and a second surface that faces in an opposite direction to the first surface;
   a body connected to the second surface of the first flange portion, and arranged in the hole;
   a tip supported by the body, and projects to an outer side from a ground contact surface of the tread portion; and
   a through hole that connects a first opening provided in the first surface and a second opening.

2. The stud pin according to claim 1, wherein
   the body includes a second flange portion that includes a third surface arranged around the tip, and a fourth surface that faces in an opposite direction to the third surface, and
   the second opening faces a space between the second surface and the fourth surface.

3. The stud pin according to claim 2, wherein
   the body includes an intermediate portion arranged between the fourth surface and the second surface, with a dimension in a plane orthogonal to a center axis that passes through the tip that is smaller than that of the second flange portion, and
   the second opening is provided on a side surface of the intermediate portion.

4. The stud pin according to claim 1 or 2, wherein
   the second opening is provided on the second surface.

5. The stud pin according to claim 1 or 2, wherein
   the second opening is provided on an outer surface of the body.

6. The stud pin according to any one of claims 1 to 5, wherein
   an area of the first opening is not less than 0.3 mm$^2$ and not greater than 3.5 mm$^2$.

7. The stud pin according to any one of claims 1 to 6, wherein
   an area of the second opening is not less than 0.3 mm$^2$ and not greater than 3.5 mm$^2$.

8. The stud pin according to any one of claims 1 to 7, wherein
   a plurality of the through holes is provided around the center axis that passes through the tip.

9. A pneumatic tire, comprising:

   a tread portion;
   a hole provided in the tread portion; and
   a stud pin described in any one of claims 1 to 8 arranged at least in part in the hole.

FIG. 1

FIG. 2

FIG. 3

FIG. 4

FIG. 5

14

FIG. 6

## FIG. 7

## FIG. 8

FIG. 9

FIG. 10

FIG. 11

FIG. 12

35

34

31

40 40

# FIG. 13

| | COMPARATIVE EXAMPLE | EXAMPLE 1 | EXAMPLE 2 | EXAMPLE 3 | EXAMPLE 4 | EXAMPLE 5 | EXAMPLE 6 | EXAMPLE 7 |
|---|---|---|---|---|---|---|---|---|
| AREA OF OPENING ($mm^2$) | 0.0 | 0.3 | 1.3 | 3.5 | 1.3 | 1.3 | 0.2 | 4.0 |
| NO. OF THROUGH HOLES | 0 | 1 | 1 | 1 | 2 | 4 | 1 | 1 |
| PIN DROP RESISTANCE PERFORMANCE | 100 | 105 | 110 | 115 | 115 | 110 | 100 | 103 |
| AMOUNT OF ROAD SURFACE DAMAGE | 100 | 115 | 110 | 105 | 115 | 120 | 103 | 100 |

# FIG. 14

**INTERNATIONAL SEARCH REPORT**

| International application No. |
| --- |
| PCT/JP2015/068205 |

A. CLASSIFICATION OF SUBJECT MATTER
*B60C11/16(2006.01)i*

According to International Patent Classification (IPC) or to both national classification and IPC

B. FIELDS SEARCHED

Minimum documentation searched (classification system followed by classification symbols)
B60C11/16

Documentation searched other than minimum documentation to the extent that such documents are included in the fields searched
Jitsuyo Shinan Koho        1922–1996    Jitsuyo Shinan Toroku Koho   1996–2015
Kokai Jitsuyo Shinan Koho    1971–2015    Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2011-521829 A (Societe de Technologie Michelin), 28 July 2011 (28.07.2011), paragraphs [0021] to [0050]; fig. 1 to 17 & US 2011/0146865 A1    & WO 2009/144198 A1 & EP 2285598 A1       & FR 2931727 A1 & CA 2725241 A1       & CN 102046397 A & EA 201071390 A1 | 1-9 |
| Y | DE 1220277 B (Oskar REINISCH), 30 June 1966 (30.06.1966), column 1, line 1 to column 2, line 32; fig. 1 to 3 (Family: none) | 1-9 |

☐ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 August 2015 (10.08.15) | 18 August 2015 (18.08.15) |

| Name and mailing address of the ISA/ Japan Patent Office 3-4-3,Kasumigaseki,Chiyoda-ku, Tokyo 100-8915,Japan | Authorized officer |
| | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011521829 PCT